# EUROPEAN PATENT APPLICATION

(11) **EP 1 229 474 A2**
(43) Date of publication of application: **07.08.2002**
(21) Application number: 02001113.6
(22) Date of filing: 24.01.2002
(51) Int. Cl.: G06F 17/60

(54) **Method and system for providing information pertaining to secondhand articles and machines via a network**

(30) Priority: 24.01.2001 JP 2001016369
(71) Applicant: Komatsu Ltd, Minato-ku, Tokyo 107-8414 (JP); Bigrental Co., Ltd., Fukushima 963-8862 (JP)
(72) Inventor: Abe, Noriaki, Minato-ku, Tokyo 107-8414 (JP); Shike, Chikashi, Koriyama, Fukushima 963-8862 (JP)
(74) Representative: Hoffmann, Eckart, Dipl.-Ing.

(57) **Abstract**

The present invention relates to the provision of highly reliable article information to customers in relationship to the electronic transaction of secondhand articles. Taking trading in secondhand construction machines as an example, when a construction machine 80 is used, the current location and cumulative operating hours of that machine 80 are monitored regularly or as required and stored as usage history on a data base 31. Also, photographs of the construction machine are taken as required while it is in use, and stored as usage history on a data base 31. Furthermore, history of the service (maintenance, repairs, and inspections) of the construction machine 80 is also stored on a data base 31. When the construction machine 80 in use is sold as a secondhand article, the current state (for example, the current cumulative operating hours), usage history, and service history of the construction machine 80 stored in the data base 31 is provided to a customer's terminal 60 from the sales server 32 via the Internet. The current state of the construction machine 80 is updated as it is used.

## Description

### BACKGROUND OF THE INVENTION

### 1. Field of the Invention

The present invention relates to a method and system for using a communication network to provide customers with information about secondhand articles.

### 2. Description of the Related Art

Electronic commercial transactions that use computer communication networks such as the Internet are widely used. The servers for these electronic commercial transactions have data bases containing article information such as the quality, specifications, and prices of the articles being handled. That article information is sent to customers' computers and the customers then decide which article they will buy based on the article information displayed on their display screens.

One of the weaknesses of electronic commercial transactions is that the customer cannot actually touch an article. This weakness is a major source of anxiety for customers in particular when they are dealing with secondhand articles, the quality of which is highly variable. That is, the article information provided by a server about secondhand articles shows the state of articles, such as the quality, performance, specifications, price and the like at the time they are put up for sale. However, a customer may still be uncertain as to whether or not that such article information is really factual, and whether or not the article has some hidden fault not revealed in the article information. Therefore, to make more accurate appraisals, customers want to know a past usage history for each secondhand article (for example, what users have used the article in what way, what problems have arisen, what service has the article received). Customers also want some proof that the article information provided by the server is reliable. Furthermore, it is still more desirable if a customer who is a prospective purchaser of an article that is still currently in use is informed of the current state of usage of that article. However, there are no conventional electronic commercial transaction sites that satisfy such demands.

### SUMMARY OF THE INVENTION

Accordingly, an object of the present invention is to enable providing customers with highly reliable article information relating to electronic commercial transactions of secondhand articles.

A further object of the present invention is to enable providing customers not only with information about the current state of a secondhand article but also with a history of past usage of the article.

A still further object of the present invention is to enable providing customers with objective proof relating to the article information provided by a server.

An even still further object of the present invention is to make it possible to inform customers who are prospective purchasers of an article still being used with information on the current usage of that article.

A method performed by a computer system for providing secondhand article information, comprising:
(1) a usage data collection step in which, when an article has been used, usage data showing the facts relating to the usage of that said article are collected;
(2) a usage history storage step in which the collected usage data are stored as usage history in a data base; and
(3) a usage history provision step in which, while said article is being put up for sale as a secondhand article, the usage history of said article stored in said data base, is provided to a customer via a network.

With this method, a customer is notified of a usage history that provides facts relating to the past use of a secondhand article being put up for sale. This enables the client to more accurately determine the quality of the secondhand article and therefore, serves to increase the reliability of electronic transactions relating to secondhand articles.

The method performed by a computer system for providing information about secondhand articles, according to the second aspect of the present invention comprises:
(1) a current state data collecting step in which, while an article is being put up for sale as a secondhand article, current state data that shows the current state of said article are collected at intervals;
(2) a current state data storage step in which the collected current state data are stored in said data base; and
(3) a current state data provision step in which, while said article is being put up for sale as a secondhand article, the current state data for said article stored in said data base, are provided to a customer via a network.

With this method, customers are notified also of the current state of the secondhand articles being put up for sale.
When this method is used, articles that are still being used by someone can be put up for sale as secondhand articles. Since the customer is provided from time to time with information showing the current state of the article in use, the customer can accurately determine the quality of that secondhand article. Accordingly, the reliability of electronic transactions of secondhand articles increases.

In a preferred embodiment of the embodiment, the aforementioned usage data and current state data are collected at a remote location away from the article by communicating with that article. This means that usage data and current state data can be collected even when the place at which the article is located is not a specific sales location. Frequent communication enables virtually real-time collection of usage data and current state data for an article. Accordingly, the client is allowed to determine more precisely the quality of the secondhand article and the reliability of electronic transactions relating to secondhand articles increases.

The usage data contained in the aforementioned usage history can include the amount of work done by the article (for example, operating time, mileage for a vehicle, failure data (error codes), various sensor information, and load frequencies) and photographic data in which the article has been actually photographed (for example, photographs before and after use, photographs taken regularly or on demand).

A preferable embodiment, in addition to the aforementioned steps further comprises:
(4) a service data collection step in which, when said article has been serviced, service data that shows the facts relating to the service of said article are collected;
(5) a service history storage step in which the collected service data are stored as service history in said data base; and
(6) a service history provision step in which, while said article is being put up for sale as a secondhand article, the service history for said article stored in said data base, is provided to a customer via a network.

This enables a customer to understand the history of any service (maintenance, repair, inspection) implemented on the secondhand article and therefore, enables a client to more easily determine the quality of a secondhand article.

A preferred embodiment of the present invention further comprises a step of updating current state data using collected usage data.

In a preferred embodiment, the aforementioned usage data or current state data collection step, service data collection step, usage history or current state data storage step, service history storage step, current state data update step, current state data provision step, usage history provision step, and service history provision step are all carried out simultaneously, in parallel. This means that an article being used can be put up for sale as a secondhand article while still in use. Such a method means that the current state, usage history, and service history of an article can be updated when new usage data and service data are collected while the article still in use, and then sent to customers. As a result, the updated current state, usage history, and service history themselves are the proof of the accuracy of the current state, usage history, and service history. Accordingly, the reliability of transactions involving secondhand articles is further improved.

In a preferable aspect of the embodiment, not only can a customer refer to the usage history and service history of a secondhand article from their terminal, but, if they so desire, they can download the data to their terminal for their own use.

### BRIEF DESCRIPTION OF THE DRAWINGS

Figure 1 is a block diagram showing a general configuration of an embodiment of a system for providing information about a secondhand article according to the present invention;
Figure 2 is a flowchart showing the procedure for updating a rental data base 11, service data base 21, and sales data base 31;
Figure 3 shows the specific configuration of a sales data base 31;
Figure 4 is a transition diagram (diagram of transition after log-in) of various user interface screens provided on a customer's terminal by a secondhand machine sale server 32;
Figure 5 shows an example of a machine model list screen;
Figure 6 shows an example of a machine list screen;
Figure 7 shows an example of a shopping cart screen;
Figure 8 shows an example of an inquiry screen;
Figure 9 shows an example of a detailed history screen; and
Figure 10 shows an example of a detailed history screen (continuation of Fig. 9).

### DESCRIPTION OF THE PREFERRED EMBODIMENTS

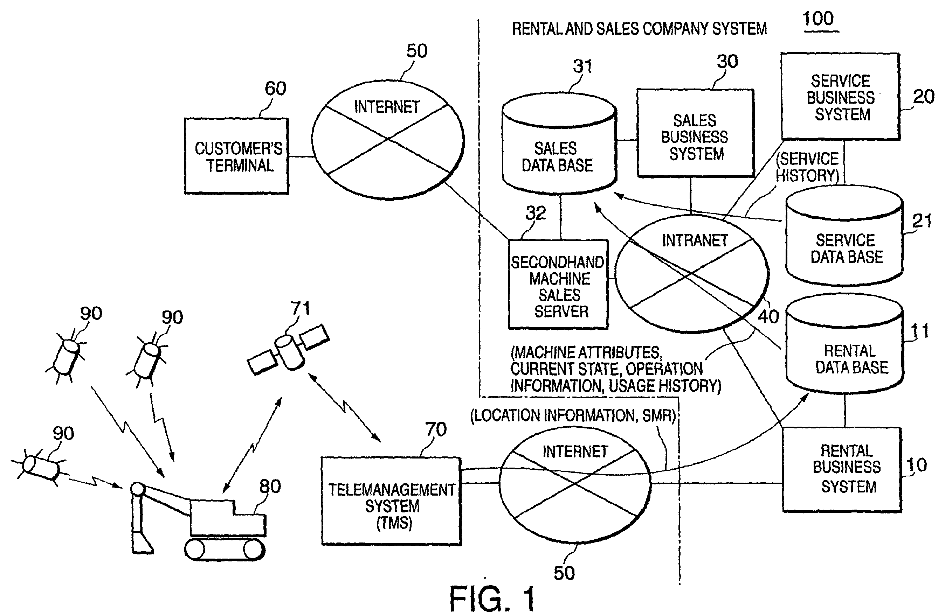

Fig. 1 shows a general construction of an embodiment of a secondhand article information provision system according to the present invention.

This embodiment relates to electronic commercial transactions of secondhand construction machines. Here is envisaged a company that is involved in the rental business of construction machines and in the sale of secondhand construction machines (hereinafter referred to as "secondhand machines") that has been rented out for a certain period of time (hereinafter referred to as "the rental and sales company") envisaged in this example is one. As shown in Fig. 1, this rental and sales company has a computer system (hereinafter referred to as "the rental and sales company system") 100 for processing their company business.

The rental and sales company system 100 has a rental business system 10 for processing business in the construction machine rental business; a service business system 20 for processing business relating to the servicing (including maintenance, repair, and inspection) of construction machine; a sales business system 30 for processing business relating to the sale of secondhand machines; and a secondhand machine sales server 32 for providing information relating to the secondhand machine being sold via the Internet 50. These can all communicate with each other via an intranet 40 or via some other communication network. Although not shown in the drawings, the rental business system 10, service business system 20, and sales business system 30 each comprise at least one, but usually a plurality of computers.

The rental business system 10 has a rental data base 11. Various data relating to the rental business for each of the many construction machines owned by the rental and sales company is stored in this rental data base 11. Specific examples of the data stored for each construction machine include: machine attributes such as models, specifications, regulations that have been met (for example, exhaust gas regulations in specific countries); current state data, which includes current location and current service meter readings (cumulative operating hours, hereinafter referred to as "SMR"); operation information that includes whether the machine is currently being rented out, is in stock, is being serviced, or has been reserved for rental; and usage history that includes the names and types of business for all customers who have had a rental contract for the machine, rental periods, photographs taken at every time of shipping of the machine for starting a rental (i.e. when the machine leave the company's premises to be handed over to a customer), photographs taken at every time of return of the machine for ending a rental (i.e. when the machine has returned from a customer to the company's premises), and the SMR at the time of every shipping and every return, in relation to all the rental contracts that have been executed and are being executed.

A large part (but not all) of a multiplicity of construction machines possessed by the rental and sales company is constantly monitored for the current state (including location information showing the machine's current location and current SMR) by a telemanagement system (mobile dynamics management system that uses satellite communication or some other mobile communication system, hereinafter referred to as the "TMS") 70 shown in Fig. 1. More specifically, as shown in Fig. 1, a construction machine 80 of the type that caters for such TMS (only one machine is shown in the drawing but of course there are many such machines) is able to determine the current location (for example, latitude and longitude) thereof based on signals from a GPS satellite 90 and to send that location information the current SMR to the TMS 70 via a communication satellite 71. Each construction machine 80 that caters for the TMS regularly sends this location information and SMR to the TMS 70. Alternatively, on demand, the TMS 70 can make an inquiry of the a construction machine 80 that caters for the TMS, receive this location information and SMR, and report this via the Internet 50 to the rental business system 10. When the rental business system 10 receives the location information and SMR for each construction machine from the TMS 70, it immediately uses the received location information and SMR to update the location information and SMR for construction machines in the rental data base 11.

The service business system 20 has a service data base 21, on which various data relating to the service of many construction machines owned by this rental and sales company is stored. Specific examples of such data include: service history which includes information such as the dates, particulars, and results of all maintenance, repair, and specific self-imposed inspections carried out on the construction machine up to the present (for example, oil analysis results and copies of specific self-imposed inspection records); and dates for next specific self-imposed inspection.

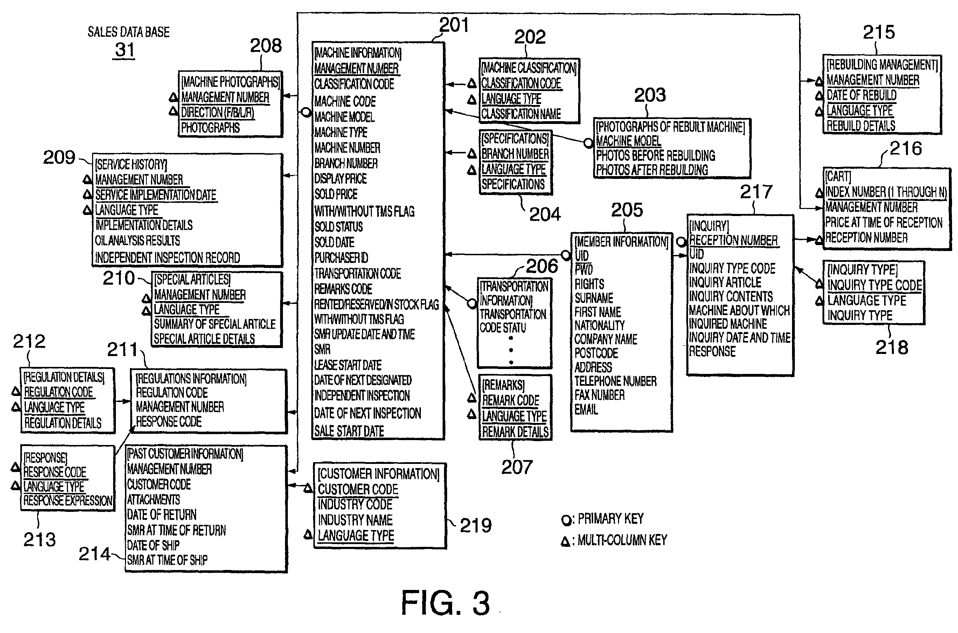

The sales business system 30 has a sales data base 31, on which various data relating to the sale of many secondhand construction machines sold by this rental and sales company is stored. Specific examples of this data, which will be explained in detail below using Fig. 3 for reference, includes machine attributes, current state, usage history, and service history for each construction machine transferred from the aforementioned rental data base 11 and service data base 21. As explained in detail below, this data is sent to the customer's terminal 60 (only one terminal is shown but of course there are many customer terminals) by the secondhand machine sales server 32. The secondhand machine sales server 32 can, for example, be a WWW server, and sends the aforementioned information about the construction machine to a browser on the customer's terminal 60 as an HTML document, that is displayed in a window. This allows the customer to know the machine attributes and current state of all construction machines on sale and further, to know the past usage history and service history thereof.

It should be noted, relating to the sales business system 30, that secondhand construction machines put up for sale by this sales business system 30 need not be only construction machines that have been taken out of the rental business but may also be machines that are still for rental. In more general terms, construction machines that are still in use can be put up for sale as secondhand articles. Modes of selling such construction machines currently in use include a normal sale in which use of the machine in question is stopped (that is, the machine is removed from the rental business) as soon as an order for it is taken, and any service that is required is performed to the machine before selling the same. Alternatively, a sale by reservation is also possible in which a reservation to purchase a machine is accepted so that the machine is sold on a future date, and the machine continues to be used (that is, rental of the machine continues) until this date.

Thus, to enable the same machine to be rented (used) and sold at the same time, as explained above, the rental business system 10 updates the current state and usage history data for construction machines in the rental data base 11 any time a change occurs in the current state or usage history of those machines used in the rental business. The service business system 20 updates service history data for the construction machines in the service data base 21 every time any machine is serviced. The sales business system 30 updates the current state, usage history, and service history data relating to relevant secondhand construction machine in the sales data base 31 to match updates in the rental data base 11 and service data base 21. The secondhand machine sales server 32 provides the customer's terminal 60 with the current state, usage history, and service history data for secondhand construction machine that is put up for sale in the sales data base 31. Accordingly, the client can understand the changes in the current state, usage history, and service history of a piece of secondhand construction machine being sold as it is rented and used. This becomes objective proof that the data relating to the secondhand construction machine provided by the secondhand machine sale server 32 is reliable and not false. Therefore, customers can be relaxed about making purchase decisions that rely on this data. In addition, the rental and sales company can control the rental business in a way that means that data relating to secondhand construction machine is not excluded from prescribed quality guarantee conditions. For example, leases can be limited so that the SMR does not exceed a certain maximum value. This means that the company can guarantee a certain quality in the secondhand construction machine it puts up for sale.

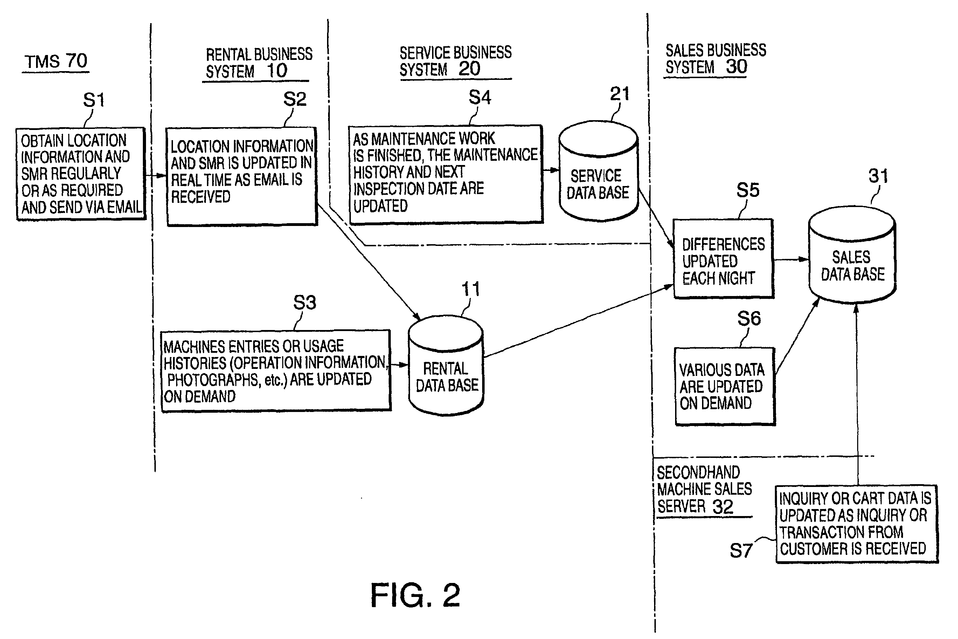

Fig. 2 shows the procedure with which the aforementioned rental data base 11, service data base 21, and sales data base 31 are updated.

The rental data base 11 is updated as follows. That is, as shown in step S1, the TMS 70 either regularly, or on demand, acquires location information showing shows the current position of equipment and the current SMR from each construction machine that caters for the TMS. This is then sent, for example by e-mail, to the rental business system 10. As shown in step S2, upon receiving this e-mail, the rental business system 10 immediately updates the location information and SMR for the relevant construction machine in the rental data base 11. Also, as shown in step S3, an operator operates the rental business system 10 on demand in accordance with the progress of the rental business (for example when a rental order is received, a lease contract created, or machine shipped out or stored). This means that new construction machine data can be added to and registered in the rental data base 11, existing construction machine data can be deleted, the aforementioned operation information (for example, whether or not the machine is currently being rented out, being serviced, or has been booked for rental) for each construction machine can be updated, or new information can be added to the aforementioned usage history for each construction machine (customer name and industry in rental contract, rental term, photographs at time of shipping, photographs at time of return, SMR at time of shipping, SMR at time of return).
The SMR of construction machine that cannot be used in the TMS can be updated on demand (for example, when the machine returns to the premises, departs from the premises, or has finished being serviced) through system operations by the operator in step S3.

Also, as shown in step S4, each time a service (maintenance, repair, inspection) is completed for a construction machine, the operator operates the service business system 20 and thus, the aforementioned service history (implementation dates, details, results) and the date of the next designated independent inspection are updated in the service data base 21.

The sales data base 31 is updated as follows. That is, as shown in step S5, every night after business has finished, the sales business system 30 automatically acquires updated differential data of the rental data base 11 and updated differential data of the service data base 21 of the day from the respective data bases 11 and 21. It then updates all data in the sales data base 31 using that updated differential data. Further, as shown in step S6, the operator operates the sales business system 30 as needed as the sales business progresses (as buy orders are received, sales contracts are established, and machine is handed over). In these operations, the relevant data in the sales data base 31 is updated. Furthermore, as shown in step S7, the secondhand machine sales server 32 updates inquiry data and shopping cart data in the sales data base 31 as inquiries or transactions (placement of machine name in electronic shopping cart) relating to machines for sale are received from customers via the Internet.

Data including the current state, usage history, and service history for each construction machine on sale in the sales data base 31, which is updated as above, accurately shows the results of use during a lease and the results of all services received. As a result, highly reliable sales of secondhand construction machines can occur.

Fig. 3 shows the specific configuration of a sales data base 31. Here, in each of the tables shown in Fig. 3, an article marked with a circle on the left hand side is a primary key that can be used as a search key to search records within that table. The multiplicity of articles marked with a triangle on the left hand side are multi-column keys that can search records in the table using the set of that multiplicity of articles as a search key. Two tables joined by an arrow are linked by the common articles at the start and end of the arrow.

In Fig. 3, the machine information table 201 comprises records for each piece of secondhand construction machine being put up for sale. As shown in the diagram, data from various articles, including a "management number" allocated to each piece of machine, machine attributes (including machine model, type, specifications), current state (SMR in particular), rental operation status (including reserved, rented out, in stock), and sales status (price, whether or not it has been sold, what date a machine was sold to whom), is registered in the record for each construction machine. Of these articles, data such as the "management number", "classification code", "machine code", "machine model", "type", "machine number", "branch number", "with/without photos", "rented/reserved/in stock flag", "with/without TMS flag", " SMR update date and time", "SMR", and "lease start date" is the same as that in the rental data base 11 because of the aforementioned update processing. Also, "date of next inspection" is the same as that in the service data base 21 because of the aforementioned update processing. Data such as "displayed price", "sold price", "sold status", "sold date", "purchaser ID", "transportation code", "remarks code", and "sale start date" is specific to the sales business and therefore is written from the sales business system 30. Here, "lease start date" refers to the date on which the rental and sales company received (on lease) or purchased the construction machine.

A number of articles from the mechanical information table 201 are explained simply below.

As explained above, a "management number" is an identification number specific to a construction machine. As shown by the arrow in Fig. 3, records for each construction machine in the machine information table 201 are linked by those "management numbers" to records with the same "management number" in the machine photograph table 208, service history table 209, special article table 210, rules information table 211, past customer information table 214, rebuilding management table 215, and cart table 216. (These tables will be explained below.)

The "classification code" is a code that shows the broad classification for construction machine (for example, hydraulic shovel, mini hydraulic shovel, bulldozer, wheel loader). As indicated by the arrow in Fig. 3, the records for the construction machine in the machine information table 210 are linked by these "classification codes" to records with the same "classification codes" in the machine classification table 202. A "classification name" corresponding to the "classification code" can be obtained from each "classification code" record in this machine classification table 202.

The "machine model" is the name of the specific machine type (for example, PC100, PC60-7) of each construction machine. As shown by the arrow in Fig. 3, records for all construction machines in the machine information table 201 are linked by these "machine models" to records with the same "machine models" in the table of photographs of rebuilt machine 203. "Photos before rebuilding" and "photos after rebuilding" corresponding to this "machine model" can be obtained from each "machine model" record in this table of photographs of rebuilt machine 203. Here, "rebuilt" refers to the servicing of a secondhand construction machine withdrawn from the rental business to bring it up to a quality suitable for sale. The "photos before rebuilding" for each machine model are photographs of a machine example of the same machine type taken before its rebuilding. "Photos after rebuilding" are photographs of the machine example taken after its rebuilding. As shown in Fig. 1, the secondhand machine sales server 32 can provide a customer's terminal 60 with photographs before rebuilding and photographs after rebuilding that correspond to each construction machine.

The "branch number" is a code that shows the specific specifications for each construction machine. As indicated by the arrow in Fig. 3, all construction machine records in the machine information table 201 are linked by these "branch numbers" to records with the same "branch numbers" in the specifications table 204. Specific "specifications" corresponding to an "branch number" can be found from each "branch number" code in this specifications table 205. As shown in Fig. 1, the secondhand machine sales server 32 can provide a customer's terminal 60 with the specific "specifications" for each construction machine.

The "display price" is the price displayed for construction machine when it is put on sale. The "sold price" is the price at which the construction machine was actually sold. As shown in Fig. 1, the secondhand machine sales server 32 can provide a customer's terminal 60 with the "display price" for each construction machine. Data not only for machines being put up for sale but also for machines that has already been sold are stored in the sales data base 31 and so data entered after a sale, for example "sold price", "sold status", "sold date", "purchaser ID", and "transportation code" is also included in this machine information table 201.

"Purchaser ID" is the member ID of a customer ("UID" in member information table 205) that purchased construction machine. As indicated by the arrow in Fig. 3, records for construction machine in the machine information table 201 are linked by these "purchaser IDs" to records with the same "UIDs" in the member information table 205. Personal information including "rights", "name", and "address" of members already registered with an "UID" can be obtained from records with "UIDs" in this member information table 205. (Only people who have been registered as members can log-into the secondhand machine sales server 32.)

The "transportation code" is a code that shows the current transportation status (being transported overland within Japan, awaiting rebuild at factory, being rebuilt in factory, awaiting shipping from factory, being processed by customs, being transported by ship) of machines purchased by a customer. It is used mainly to enable customers to confirm the current state of machines they have purchased. As shown by the arrow in Fig. 3, construction machine records in the machine information table 201 are linked by these "transportation codes" to records with the same "transportation codes" in the transportation information table 206. "Transportation status" data corresponding to these "transportation codes" can be obtained from "transportation code" records in this transportation information table 206.

As indicated by the arrow in Fig. 3, the construction machine records in the machine information table 201 are linked by "remarks codes" to records with the same "remarks codes" in the remarks table 207. "Remarks" data corresponding to these "remarks codes" can be obtained from all "remarks code" records in the remarks table 207.

The "rented/reserved/in stock flag" indicates the operation status of construction machine. A "rented" flag shows that the machine is currently being out on lease. A "reserved" flag shows that a rental reservation has been received, and an "in stock" flag shows that the machine is currently not rented and is in stock. As shown in Fig. 1, the secondhand machine sales server 32 can, based on these "rented/reserved/in stock" flags" for construction machines, provide a customer's terminal 60 with information as to whether or not a construction machine is being rented.

The "with/without TMS flag" shows whether or not a construction machine can cater for the TMS. If this flag is shown, the machine caters for the TMS and the "SMR" in this table 20 is updated, virtually in real time, by information sent from the TMS 70 as discussed above. The "SMR" of machine that does not cater for TMS is, as explained above, updated for example after it returns into stock, leaves the factory, or is serviced. As shown in Fig. 1, the secondhand machine sales server 32 can provide a customer's terminal 60 with the latest "SMR" for each construction machine.

As explained above, construction machine records in the machine information table 201 are linked by "management numbers" to records with the same "management numbers" in the machine photographs table 208, service history table 209, special articles table 210, regulations information table 211, past customer information table 214, rebuild management table 215, and cart table 216. Tables 208 through 211 and tables 214 through 216 will be explained below.

In the machine photographs table 208, all of the photographs taken when a machine has left the premises for rental and all of the photographs taken when the machine has returned to the premises are stored for construction machine corresponding to each "management number". When construction machine leaves from and returns to the premises, at least four photographs are taken: the front view, rear view, and left and right views of the machine. These photographs are copied in the aforementioned update processing from the rental data base 11. As shown in Fig. 1, the secondhand machine sales server 32 can provide a customer's terminal 60 with all past photographs for any construction machine taken when that machine has left and has returned to the premises. The photographs taken when machine leaves for rental and when it returns are useful in aiding any judgement about the quality of a construction machine.

The service history, including "service implementation date ", "service implementation details" (for example what type of service was implemented and names of any parts that were repaired or replaced), "oil analysis results", and "independent inspection record sheet", is registered in the service history table 209 for construction machine corresponding to each "management number". As shown in Fig. 1, the secondhand machine sales server 32 can provide a customer's terminal 60 with the service history for each construction machine. The service history is useful in aiding any judgement about the quality of a construction machine. In particular, the results of oil analysis show the amount of metal in the engine oil and are therefore useful in determining the quality of the engine.

Special articles (for example, the fact that a special service has been implemented, or that a major fault has occurred) relating to construction machine corresponding to each "management number" are recorded in the special articles table 210. As shown in Fig. 1, the secondhand machine sales server 32 can provide a customer's terminal 60 with special articles for each construction machine.
Special articles are useful in aiding any judgement about the quality of the construction machine concerned.

A "regulation code" that specifies types of regulations, for example exhaust gas regulations, corresponding to construction machine, and a "response code" that shows the specific response are registered for construction machine corresponding to all "management numbers" in the regulations information table 211. As shown by the arrow in Fig. 3, records for each construction machine in the regulations information table 211 are linked by these "regulation codes" to records with the same "regulation codes" in the regulation details table 212. They are also linked by the "response code" to records with the same "response code" in the response table 213. The "regulation details" for regulations specified by a "regulation code" can be obtained from the "regulation code" records in the regulation details table 212. The "response expression" for a specified regulation (for example, a table showing whether or not regulations for each financial year for each country have been met) can be obtained from the " response code" record in the response table 213. As shown in Fig. 1, the secondhand machine sales server 32 can provide a customer's terminal 60 with information stating how a construction machine meets regulations in different countries based on the "responses expression" and "regulation details" for each construction machine. The regulations to which machines conform is useful information in determining performance, for example in determining the countries in which construction machines can be used.

Information relating to all rental contracts executed in the past for a construction machine, including for example "customer codes" that show all customers, "attachments" that show any attached tools, "date of return" that shows each date when the machine has returned from each rental customer, "SMR at time of return" that shows each SMR when the machine has returned from each rental customer, "date of shipping" that shows each date when the machine has been shipped to each rental customer, and "SMR at time of shipping" that shows each SMR when the machine has been shipped to each rental customer, is recorded for construction machines for each "management number" in the past customer information table 214. Records for each construction machine in the past customer information table 214 is linked by "customer codes" to records with the same "customer codes" in the customer information table 219. Data including "industry code" and "industry name" can be obtained from the "customer code" records in the customer information table 219. As shown in Fig. 1, the secondhand machine sales server 32 can provide a customer's terminal 60 with a list of the industries in which past customers were involved and the number of hours for which the machine was operated in each industry. This information is provided for each construction machine based on the "SMR at time of return", "SMR at time of shipping", and "industry name" of customers for all past leases. It is well known in any industry, that the workload placed on construction machine differs according to the field in which a user works and so the number of operating hours by industry is useful in determining the quality of a construction machine.

Data including "date of rebuild" and "rebuild details" for construction machine that has been rebuilt is registered for construction machine corresponding to each "management number" in the rebuild management table 215. As shown in Fig. 1, the secondhand machine sales server 32 can provide a customer's terminal 60 with the date of a rebuild and details of rebuild for any construction machine.
Information on the type of rebuild involved can be useful in determining the quality of the construction machine.

The "index number" that shows the administration number in the electronic shopping cart into which the construction machine has been placed, the "price at time of reception" that shows the display price at the time the secondhand machine sales server 32 received the shopping cart, and the "reception number" that shows the identification number of the shopping cart are registered for construction machines corresponding to each "management number" in the cart table 216. Here, the electronic shopping cart is temporary storage provided for a customer by the secondhand machine sales server 32. It performs a role similar to that of a shopping cart in an ordinary shop. One or more construction machines selected by a customer can be temporarily registered in the shopping cart. Construction machines placed in the shopping cart are viewed as articles that a customer is considering purchasing.

Records for construction machines in the cart table 216 are linked by these "reception numbers" to records with the same "reception numbers" in the inquiries table 217. Data including a "UID" which shows a ID code of each customer, "inquiry type code", "inquiry article", "inquiry details", "inquired machine", "inquiry date and time", and "response" to each inquiry, all of which relate to inquiries sent by a customer to the secondhand machine sales server 32 about construction machines in the shopping cart for a "reception number", are registered in the record for that "reception number" in the inquiries table 217. Records for each "reception number" in the inquiries table 217 are linked by the "UIDs" to records with the same "UIDs" in the member information table 205 and, by the "inquiry type code" to records with the same "inquiry type code" in the inquiry types table 218. The inquiry type corresponding to the "inquiry type code" can be obtained from records for all "inquiry type codes" in the inquiry types table 218. The secondhand machine sales server 32 can received an inquiry from a customer's terminal 60 about construction machines placed in that customer's shopping cart. The response to that inquiry is sent to the customer's terminal 60, for example via email, from the sales business server 30. This inquiry function is useful in helping customers to obtain information that they cannot obtain just from information on the screen provided by the secondhand machine sales server 32.

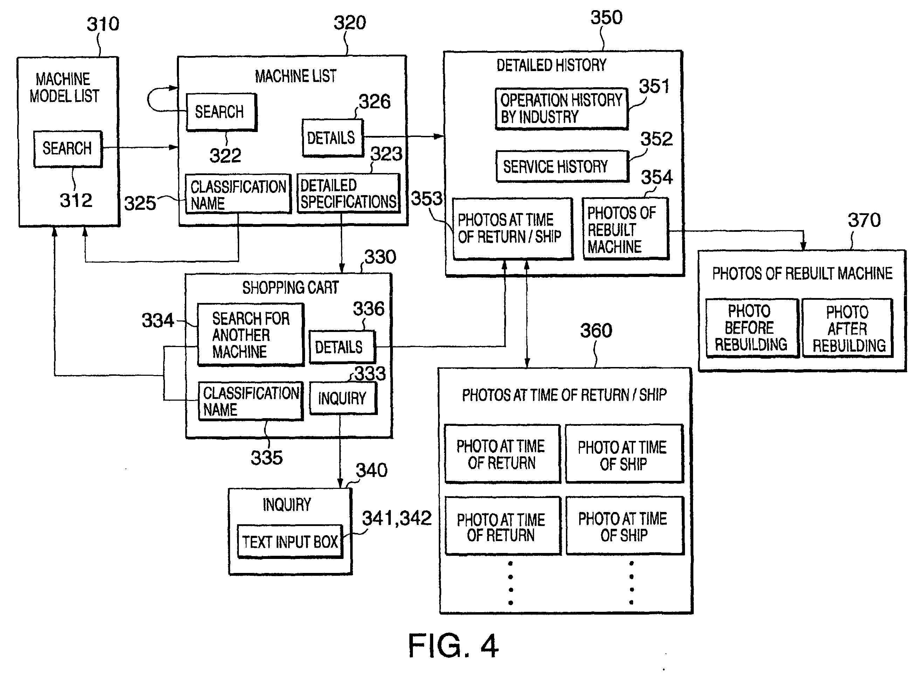

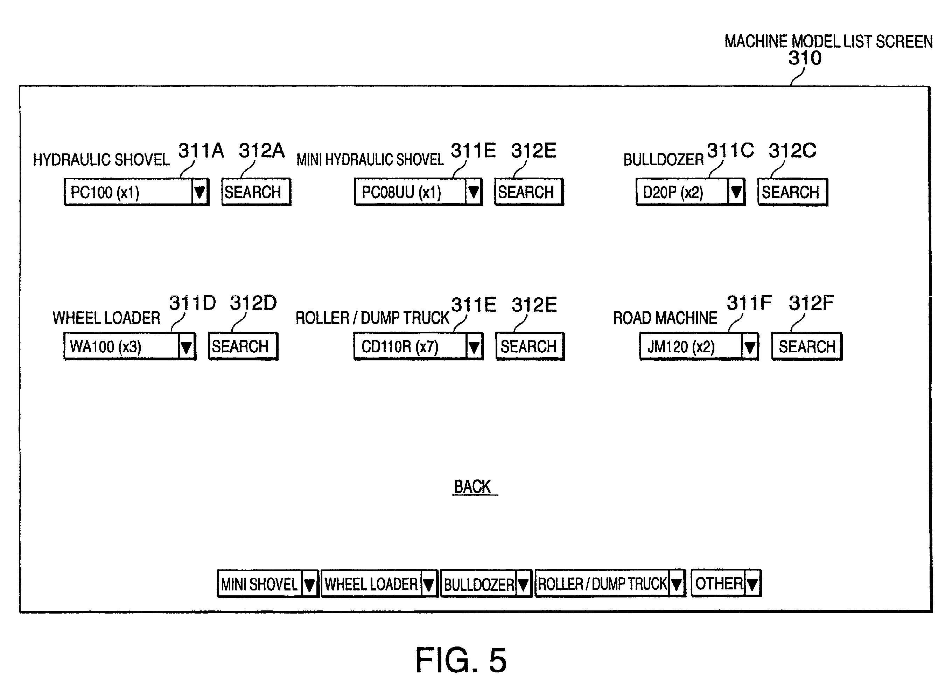

Fig. 4 shows the transitions in the various user interface screens provided on the customer's terminal by the secondhand machine sales server 32 based on data in the aforementioned sales data base 31. (Only transitions between typical screens displayed after log-in are shown.) Also, Figs. 5 through 10 are specific examples of screens shown in Fig. 4.

After a customer has logged in, the secondhand machine sales server 32 sends the machine model list screen 301, as shown in Fig. 4, to the customer's terminal 60.

Fig. 5 shows a specific example of a machine model list screen 310.

As shown in Fig. 5, the machine model list screen 310 shows all the different models of construction machines handled in their different classifications, that is as hydraulic shovels, mini hydraulic shovels, and bulldozers ("classification name" in machine classification table 202 in Fig. 3). In this machine model list screen 310, by opening pull-down menus in the combination boxes 311A through 311F for each classification, a customer can view all machine models belonging to the classification, and can select any model therefrom. Next to the name of each model, the number of machines in stock belonging to that model and put up for sale is shown, as shown in the diagram. When the customer presses any of search buttons 312A through 312F for a classification name, the secondhand machine sales server 32 retrieves machines in stock belonging to the machine model selected in the combination box corresponding to the pressed search button from the machine information table 201 shown in Fig. 3, and, as shown in Fig. 4, produces a machine list screen 320 in which information on the retrieved machines is listed and sends this to the customer's terminal 60.

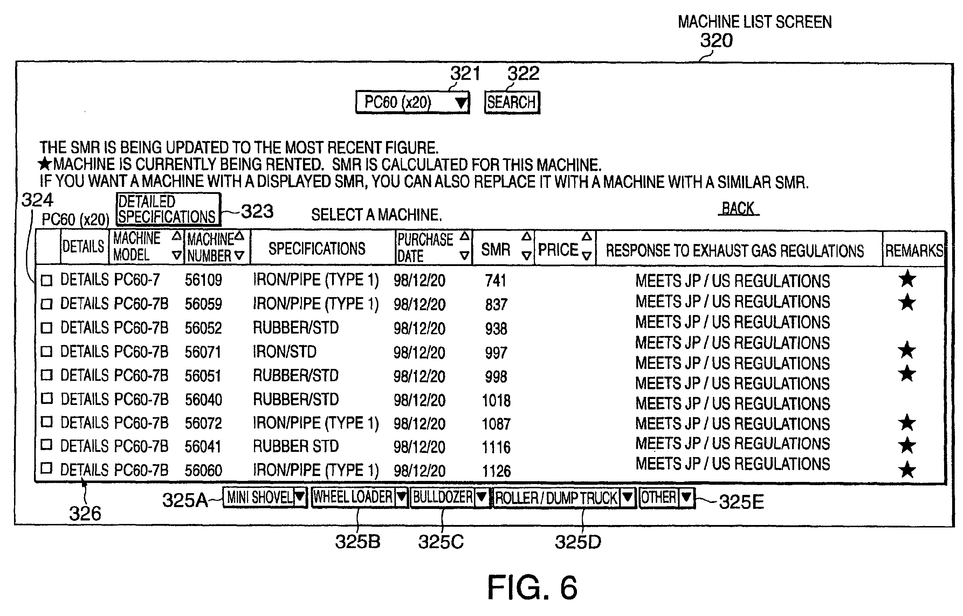

Fig. 6 shows a specific example of a machine list screen 320. (The example is for machine model known as "PC60".)

As shown in Fig. 6, a machine model selected by the user is displayed in the upper combination box 321 on the machine list screen 320. Information on the machines in stock belonging to that model is shown in list form in the central machine list table 324. The information displayed in the machine list table 324 is based on data in the sales data base 31 shown in Fig. 3 and so, for example, comprises articles such as the detailed machine model name, machine number, specifications, purchase date (= lease start date), SMR, price (= display price), response to exhaust gas regulations (based on regulation details and response expression), and whether or not the machine is being rented (based on the rented/reserved/in stock flag). Here, the SMR changes in approximately real time (for example, every day) as the aforementioned data base is updated when the machine in question caters for TMS and is being rented. The price can also be updated regularly or as required in automatic processing or manual processing for the sales business system 30.

When a customer wants to search for machines in stock of a model other than that currently displayed on the machine list screen 320, if that machine belongs under the same classification name as the one currently being displayed, the customer selects the model from the combination box 321 at the top of the machine list screen 320 and presses the search button 322. When this is done, the secondhand machine sales server 32 searches for machines in stock of the selected model as above. It then creates a new machine list screen 320 with the search results and sends this to the customer's terminal 60. Also, when the model for which a search is needed belongs under a classification name different to that of the current model, the customer can select the desired classification name from combination boxes 325A through 325E at the bottom of the machine list screen 320. When this is done, the secondhand machine sales server 32 creates a new machine model list screen 310 as shown in Fig. 5, in which the combination box for the selected classification name and a search button are displayed. This is then sent to the customer's terminal 60 as shown in Fig. 4. The customer, as described above, can then select the desired machine model from the combination boxes on this new machine model list screen 310 and press the search button.

When there is one or more machines in stock that a customer would like to view more closely and which are displayed on the machine list table 324 on the machine list screen 320, the customer checks the check boxes to the left of the corresponding machines in the machine list table 324 then presses the detailed specifications button 323 directly above the machine list table 324. When this is done, the secondhand machine sales server 32 adds the machine to be viewed to the electronic shopping cart allocated to the customer. It then obtains information relating to the machine in that shopping cart from the sales data base 31 and, as shown in Fig. 4, uses that information to create a shopping cart screen 330 that displays a list of that machine information. It then sends this to the customer terminal 60.

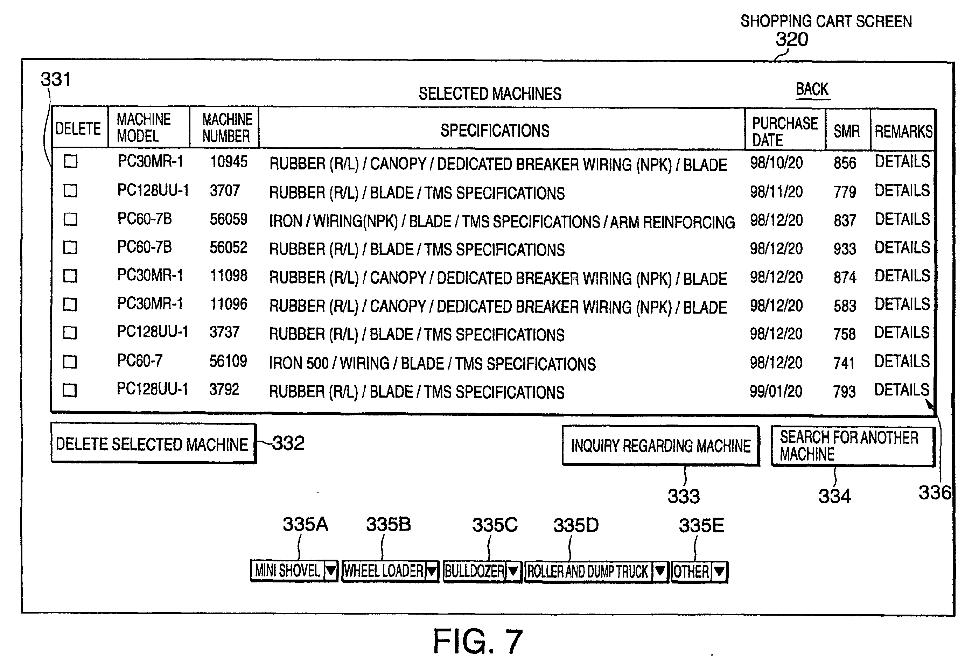

Fig. 7 is a specific example of the shopping cart screen 330.

As shown in Fig. 7, in the central machine list 331 on the shopping cart screen 330, information about machines currently in the shopping cart ("selected machines" on this screen 330) is displayed in list form. Information displayed on the machine list 331 is based on the data in the sales data base 31 shown in Fig. 3 and so, for example, comprises articles including detailed machine model name, machine number, specifications, purchase date (= lease start date), and SMR. Here, the SMR is changed in approximately real time (for example, daily) in the aforementioned database update processing if the machine in question caters for TMS and is currently being rented.

When a customer wishes to take one or more machines currently being displayed on the shopping cart screen 330 out of the shopping cart, that customer places a check in the check box to the left of the machine to be deleted on the machine list 331 and then presses the "delete selected machine" button 332 which is directly below the machine list 331. When this is done, the information on that machine is deleted from the shopping cart and from the shopping cart screen 330.

Also, when a customer wants to search for a machine other than those displayed on the shopping cart screen 330, the customer presses the "search for another machine" button 334 on the shopping cart screen 330, or selects the classification name of the desired machine from the lower combination boxes 335A through 335E. When this is done, the secondhand machine sales server 32, as already explained for the machine list screen 320, sends the machine model list screen 310, as shown in Fig. 5, to the customer's terminal 60. The customer can then select the desired model on that machine list screen 310 and conduct a search.

Also, when a customer wants to make an inquiry regarding a machine displayed on the shopping cart screen 330, the customer presses the "inquiry regarding machine" button 333 on the shopping cart screen 330. When this is done, the secondhand machine sales server 32, as shown in Fig. 4, creates an inquiry screen 340 regarding the machines displayed on the shopping cart screen 330 and sends this to the customer's terminal 60.

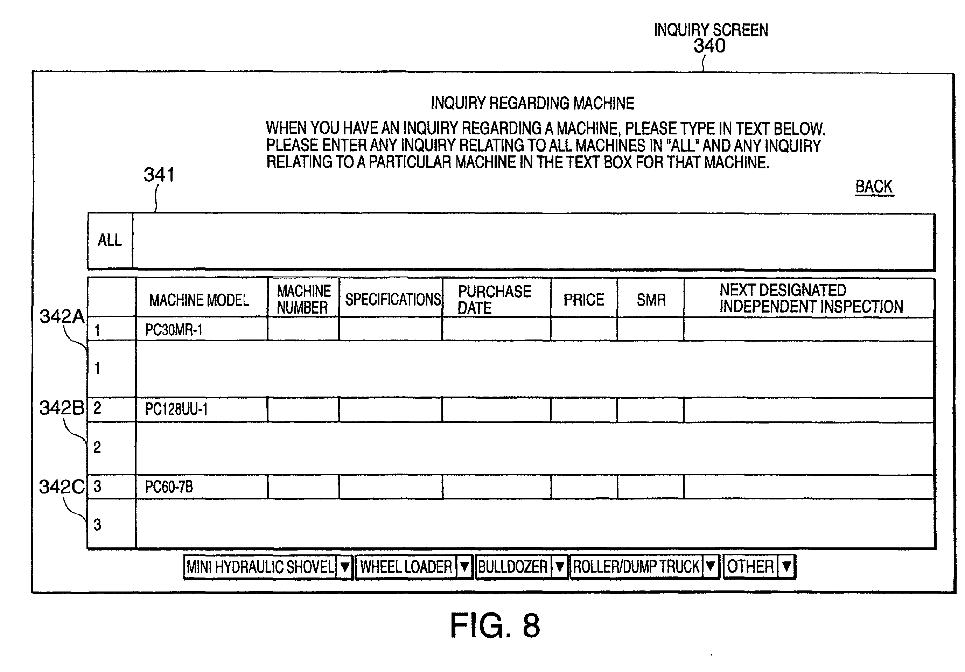

Fig. 8 shows a specific example of an inquiry screen 340.

As shown in Fig. 8, the inquiry screen 340 includes a common text box 341, in which a customer types questions relating to all machines displayed on the shopping cart screen 330, and individual text boxes, 342A, 342B, and so on, in which the customer types questions relating to each individual machine. The customer can enter questions in these text boxes then send them to the secondhand machine sales server 32. The questions thus sent are registered in the inquiry table 217 in the sales data base 31 shown in Fig. 3.
Replies to the questions are returned to the customer from the rental and sales company by email, web page, facsimile, or telephone.

When the "details" button 326 or 336, for any machine displayed on the machine list screen 320 shown in Fig. 6 or the shopping cart screen 330 shown in Fig. 7, is pressed by a customer, the secondhand machine sales server 32, based on the service history and usage history data registered in the service history table 209, past customer information table 214, and customer information table 219 in the sales data base 31 shown in Fig. 3, creates a detailed history screen 350 for that machine and sends it to the customer's terminal 60, as shown in Fig. 4.

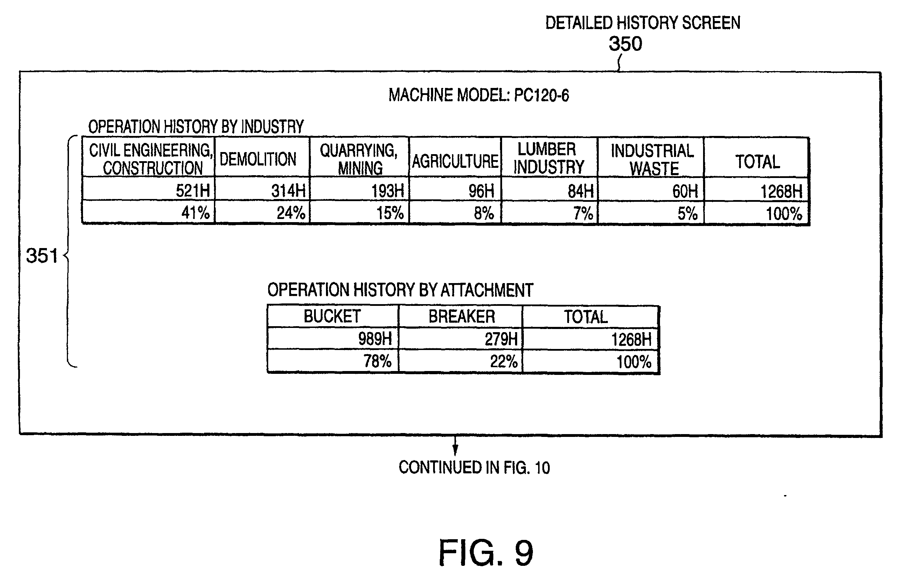

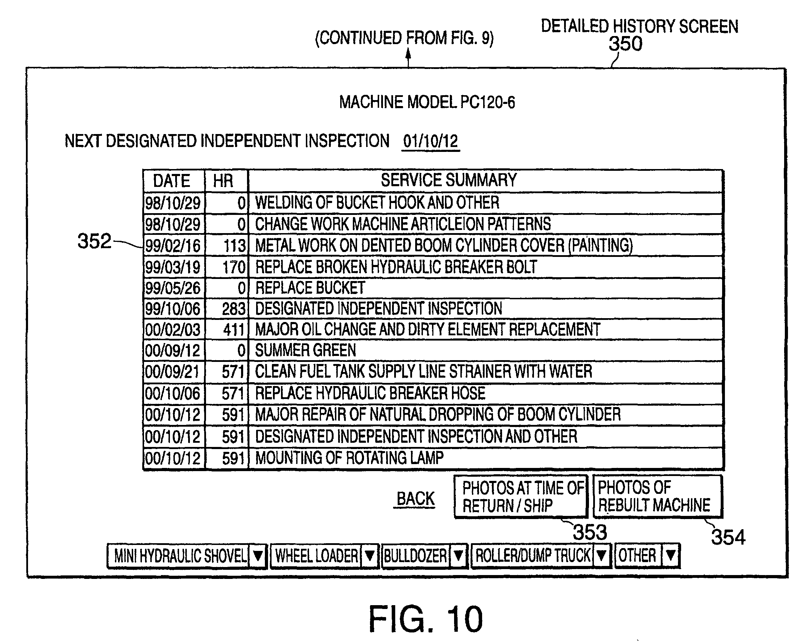

Figs. 9 and 10 are specific examples of the detailed history screen 350.

As shown in Figs. 9 and 10, an operation history by industry table 351 and a service history table 352 are displayed on the detailed history screen 350. The operation history by industry table 351 shown in Fig. 9, shows a list of the total operating hours by type of industry for past customers and a list of the total operating hours by attachment (operating hours with each attachment used). These figures are based on usage history data (in particular, customer's industry, SMR at time of return, SMR at time of shipping, attachments) for machines registered in the past customer information table 214 and customer information table 219 in the sales data base 31 shown in Fig. 3. The list of the operating hours by industry displayed here, as mentioned above, is useful in determining the condition of the machine. The list of the operating hours by attachment also varies according to the difficulty of work involved when particular attachments are used and so is useful in determining the condition of the machine. Also, the service history table 352 shown in Fig. 10, shows the service history for machines registered in the service history table 209 in the sales data base 31 shown in Fig. 3.

Also, as shown in Fig. 10, when a customer presses the "photographs at time of return/shipping" button 353, which is located at the bottom of the detailed history screen 350, the secondhand machine sales server 32 reads all the photographs taken at the time of shipments and returns of the machine in question which are registered in the machine photographs table 208 in the sales data base 31 shown in Fig. 3. Then, as shown in Fig. 4, the server creates the "photographs at time of return/shipping" screen 360, which displays the photographs, and sends the screen 360 to the customer's terminal 60.

Also, as shown in Fig. 10, when a customer presses the "photographs of rebuilt machine" button 354, which is located at the bottom of the detailed history screen 350, the secondhand machine sales server 32 reads photographs taken before and after rebuilding of a machine of the model in question registered in the rebuilt machine photographs table 208 within the sales data base 31 shown in Fig. 3. Then, as shown in Fig. 4, it creates the "rebuilt machine photographs" screen 370, which displays these before and after photographs, then sends the screen 370 to the customer's terminal 60.

An aspect of the embodiment of the present invention has been explained above. However, the present invention is not limited to this aspect of the embodiment and can be applied to various other aspects.

For example, the usage data for articles collected by the TMS or manually, can include not only the machines' operating hours, as in the above aspect of the embodiment, but also information such as the distance travelled by a vehicle, mechanical fault information (error codes), sensor information, and load frequencies.

For example, an alternative to a static screen showing the aforementioned rebuilt machine photographs could be a screen displaying a video taken by a video camera showing a model machine before and after rebuilding. Photographs before and after a rebuild can be also be provided for an actual machine that has already been rebuilt. When video shot with a video camera is used, a customer can implement remote operation of a CCD camera placed in the company vehicle shed. This can be done from their own terminal. By showing these pictures on their own terminal, a customer can check on an article from various angles in real time, and can confirm the state of any rebuild.

Furthermore, if the customer so desires, they can download to their terminal 60 the machine attributes, current state, operation status, usage history, and service history of individual construction machines from the secondhand machine sales server 32. When this is done, for example, a sales agency other than the aforementioned rental and sales company can download the aforementioned data as a customer and use it for their sales. This means that the sales agency is also able to provide a highly reliable secondhand machine sales, service and guarantee business.

Also, the display price of all machines can be automatically calculated and updated to take into consideration depreciation and rental turnover.

The secondhand machine sales server 32 not only provides customers with information about machines being sold but is configured to enable it to process orders and settlements relating to machine sales to customers. Sales, as described above, can include reservation sales in which a customer indicates that in the future they will purchase a machine that is currently being rented. The secondhand machine sales server 32 or the sales business system 30 can also be provided with a function that automatically calculates the price at the time of a future sale taking into consideration machine depreciation and rental turnover.

In the present invention, the secondhand article sales company need not be a user of those articles as in the above aspect of the embodiment, but, as with ordinary secondhand article sales, the user and the sale company can be different. In particular, if the machine is one that caters for TMS, no matter who the user is, the status of the machine can be obtained and stored as usage history through the TMS and that history can be provided to customers at the time of sale. Also, if a computer network system is set up to collect a range of information obtained during regular inspections, services or when repairs are done from the institution that carried out such work and to store this as usage history or service history on a data base for those machines that do not cater for TMS, that history can be provided to customers at the time of sale.

The present invention can be applied not only to secondhand construction machines but also to transactions involving a variety of secondhand articles.

## Claims

1. A method performed by a computer system for providing secondhand article information, comprising:
a usage data collection step in which, when an article has been used, usage data showing the facts relating to the usage of that said article are collected;
a usage history storage step in which the collected usage data are stored as usage history in a data base; and
a usage history provision step in which, while said article is being put up for sale as a secondhand article, the usage history of said article stored in said data base, is provided to a customer via a network.

2. The method according to claim 1, wherein said usage data collection step or current state data collection step includes a step for collecting usage data or current state data for said article by communicating with said article from a remote location away from said article.

3. The method according to claim 1, further comprising:
a service data collection step in which, when said article has been serviced, service data that shows the facts relating to the service of said article are collected;
a service history storage step in which the collected service data are stored as service history in said data base; and
a service history provision step in which, while said article is being put up for sale as a secondhand article, the service history for said article stored in said data base, is provided to a customer via a network.

4. The method according to claim 1, wherein said usage data collection step, said usage history storage step, and said usage history provision step are conducted simultaneously in parallel so that an article still in use can be put up for sale as a secondhand article.

5. The method according to claim 1, wherein said usage data includes operation data that shows an amount of work done by said article.

6. The method according to claim 1, wherein said usage data includes photographic data showing actual images of said article.

7. The method according to any one of claims 1 and 3, further comprising a download step of downloading the usage history or service history for said article, which are stored in said data base, to a terminal used by said customer via a network.

8. A method performed by a computer system for providing secondhand article information, comprising:
a current state data collecting step in which, while said article is being put up for sale as a secondhand article, current state data that shows the current state of an article are collected at intervals;
a current state data storage step in which the collected current state data are stored in said data base; and
a current state data provision step in which, while said article is being put up for sale as a secondhand article, the current state data for said article stored in said data base, are provided to a customer via a network.

9. The method according to claim 8, wherein said usage data collection step or current state data collection step includes a step for collecting usage data or current state data for said article by communicating with said article from a remote location away from said article.

10. The method according to claim 8, further comprising:
a service data collection step in which, when said article has been serviced, service data that shows the facts relating to the service of said article are collected;
a service history storage step in which the collected service data are stored as service history in said data base; and
a service history provision step in which, while said article is being put up for sale as a secondhand article, the service history for said article stored in said data base, is provided to a customer via a network.

11. A method performed by a computer system for providing secondhand article information comprising:
a usage data collection step in which, when an article has been used, usage data showing the facts relating to the usage of that said article are collected;
a usage history storage step in which the collected usage data are stored as usage history in a data base;
a current state data collecting step in which, while said article is being put up for sale as a secondhand article, current state data that shows the current state of said article are collected at intervals;
a current state data storage step in which the collected current state data are stored in said data base;
a current state data provision step in which, while said article is being put up for sale as a secondhand article, the current state data for said article stored in said data base, is provided to a customer via a network; and
a usage history provision step in which, while said article is being put up for sale as a secondhand article, the usage history of said article stored in said data base, is provided to a customer via a network.

12. The method according to claim 11, wherein said usage data collection step or current state data collection step includes a step for collecting usage data or current state data for said article by communicating with said article from a remote location away from said article.

13. The method according to claim 11, further comprising:
a service data collection step in which, when said article has been serviced, service data that shows the facts relating to the service of said article are collected;
a service history storage step in which the collected service data are stored as service history in said data base; and
a service history provision step in which, while said article is being put up for sale as a secondhand article, the service history for said article stored in said data base, is provided to a customer via a network.

14. The method according to claim 11, wherein said usage data collection step, said usage history storage step, and said usage history provision step are conducted simultaneously in parallel so that an article still in use can be put up for sale as a secondhand article.

15. The method according to claim 11, further comprising a step of updating said current state data within said data base based on collected said usage data.

16. The method according to claim 11, wherein said usage data includes operation data that shows an amount of work done by said article.

17. The method according to claim 11, wherein said usage data includes photographic data showing actual images of said article.

18. The method according to any one of claims 11 and 13, further comprising a download step of downloading the usage history or service history for said article, which are stored in said data base, to a terminal used by said customer via a network.

19. A computer system for providing information about secondhand articles, comprising:
usage data collection means that, when said article has been used, collects usage data that shows the facts relating the usage of the article;
a data base;
usage history storage means that stores the collected usage data as usage history on said data base; and
usage history provision means that, while said article is being put up for sale as a secondhand article, provides the usage history for said article stored in said data base, to a customer via a network.

20. The system according to claim 11, further comprising:
service data collection means that, when said article has been serviced, collects service data that shows the facts relating to the service of the article;
service history storage means that stores the collected service data as service history on said data base; and
service history provision means that, while said article is being put up for sale as a secondhand article, provides the service history for said article stored in said data base, to a customer via a network.
